# EUROPEAN PATENT APPLICATION

(11) **EP 2 869 281 A1**
(43) Date of publication of application: **06.05.2015**
(21) Application number: 12880647.8
(22) Date of filing: 02.07.2012
(51) Int. Cl.: G08G 1/127, B65G 61/00, G06Q 50/10, G06Q 50/28, G06Q 50/30, G08G 1/00

(54) **ON-DEMAND-VEHICLE SERVICE MANAGEMENT DEVICE, ON-DEMAND-VEHICLE SERVICE MANAGEMENT METHOD, AND ON-DEMAND-VEHICLE SERVICE MANAGEMENT SYSTEM**

(71) Applicant: Toyota Jidosha Kabushiki Kaisha, Toyota-shi, Aichi 471-8571 (JP)
(72) Inventor: Osumi Ryota, Toyota-shi Aichi 471-8571 (JP); ENDO Masato, Toyota-shi Aichi 471-8571 (JP); KAWAMOTO Masayuki, Toyota-shi Aichi 471-8571 (JP); MORII Tatsuya, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/066906
(87) International publication number: WO 2014/006676

(57) **Abstract**

A user who desires provision of a commodity or a service using an on-demand bus (10) transmits reservation information including a desired provision content of the commodity or the service whose provision is desired and a desired provision time at which the provision of the commodity or the service is desired to an operation management center (20) by using an information terminal device (30). The center (20) uses the desired provision content and the desired provision time to determine a first operation schedule in which the user is moved to a location at which the commodity or the service is to be provided or a second operation schedule in which the commodity or the service is moved to a location at which the provision of the commodity or the service is to be received by the user. At this time, the center (20) determines the first operation schedule or the second operation schedule so as to satisfy the desired provision time desired by the user.

## Description

### Technical Field

The present invention relates to an on-demand vehicle operation management device, an on-demand vehicle operation management method, and an on-demand vehicle operation management system, for creating an operation schedule of an on-demand vehicle based on requests received from a plurality of users and managing an operation of the on-demand vehicle in accordance with the created operation schedule.

### Background Art

Up to now, there are known, for example, an on-demand bus operation scheduling system and a method therefor, which make use of an operation track record as disclosed in Patent Literature 1. The related-art on-demand bus operation scheduling system or the like includes: a database for storing the operation track record regarding a reservation and a track record in terms of getting on/off of a passenger; means for extracting characteristic information relating to the getting on/off of the passenger from the operation track record stored in the database in advance, and storing the extracted characteristic information and information indicating the reservation included in the operation track record corresponding to the extracted characteristic information in the database in association with each other; and means for determining, when a current situation that determines an operation schedule is consistent with a situation indicated by the characteristic information, the operation schedule of an on-demand bus based on reservation information included in the operation track record corresponding to the consistent characteristic information.

Further, up to now, there is also known, for example, a vehicle operation system disclosed in Patent Literature 2. In this related-art vehicle operation system, a new reservation combination, that is, a new combination of a demand content currently registered in a reservation list and a new demand content, is created when a new operation plan candidate is created. In regard to the new reservation combination, calculation of a zone dispatch level index and a primary assessment thereof based on a zone dispatch level reference index for each pre-defined zone (urban area, old urban area, or mountain area) are performed, while calculation of a service index and an operation index and a primary assessment thereof are performed. Accordingly, the new reservation combination that has passed both the primary assessments is put in an overall rank, based on which a new operation plan is determined.

In addition, up to now, there is also known, for example, a demand bus system disclosed in Patent Literature 3. In this related-art demand bus system, a processing control unit creates the operation plan based on a demand including boarding/drop-off points and a desired boarding time, which is received from a user, and performs vehicle operation control in accordance with the created operation plan. Further, the processing control unit regularly derives ease-of-reservation information on getting on/off caused by a new demand based on an active operation plan, that is, an operation plan employed for a bus/vehicle operation, and sends the derived ease-of-reservation information to a user terminal device and a base terminal device.

### Citation List

### Patent Literature

[PTL 1] JP 2011-22646 A
[PTL 2] JP 2009-294904 A
[PTL 3] JP 2010-244177 A

### Summary of Invention

Incidentally, in the related-art systems and the like disclosed in Patent Literatures 1 to 3, an operation schedule and an operation plan are determined on the assumption that a user who uses an on-demand bus, a vehicle, or a demand bus gets thereon and moves. In this manner, when the operation schedule and the operation plan are determined on the assumption that only the user uses an on-demand vehicle to move, there are limitations to efficiently operating the on-demand vehicle so as to satisfy reservation information on the user, more specifically, desired boarding/drop-off points and desired boarding/drop-off times, and to operating the on-demand vehicle while suppressing a fare borne by the user (increase in cost). This becomes more conspicuous particularly in an area and a time slot that exhibit a lower flow of people, which makes it hard to satisfy the user's request (demand). Therefore, it is desired to determine the operation schedule of the on-demand vehicle more efficiently and rationally.

The present invention has been made in order to solve the above-mentioned problem, and it is an object thereof to provide an on-demand vehicle operation management device, an on-demand vehicle operation management method, and an on-demand vehicle operation management system, for determining an operation schedule of an on-demand vehicle efficiently and rationally.

An on-demand vehicle operation management device according to one embodiment of the present invention for achieving the above-mentioned object includes operation management means. The operation management means creates an operation schedule of an on-demand vehicle based on requests received from a plurality of users and manages an operation of the on-demand vehicle in accordance with the created operation schedule.

A feature of one embodiment of the present invention resides in that the operation management means is configured to: acquire information including, among the requests received from the plurality of users, at least a desired provision content of a commodity or a service whose provision using the on-demand vehicle is desired and a desired provision time at which the provision of the commodity or the service is desired; and determine, by using the desired provision content and the desired provision time that are included in the acquired information, a first operation schedule in which the user who desires the provision of the commodity or the service is moved to a location at which the commodity or the service is to be provided or a second operation schedule in which the commodity or the service is moved to a location at which the provision of the commodity or the service is to be received by the user. Note that, in this case, the operation management means may include: information acquisition means for acquiring information including, among the requests received from the plurality of users, at least a desired provision content of a commodity or a service whose provision using the on-demand vehicle is desired and a desired provision time at which the provision of the commodity or the service is desired; and operation schedule determination means for determining, by using the desired provision content and the desired provision time that are included in the information acquired by the information acquisition means, a first operation schedule in which the user who desires the provision of the commodity or the service is moved to a location at which the commodity or the service is to be provided or a second operation schedule in which the commodity or the service is moved to a location at which the provision of the commodity or the service is to be received by the user.

In this case, the operation management means may determine the first operation schedule or the second operation schedule so as to satisfy the desired provision time included in the acquired information (so that, for example, the commodity or the service can be provided at a time closer to the desired provision time). Further, in those cases, the operation management means may be configured to: determine, by using the desired provision content included in the acquired information, whether or not the commodity or the service desired by the user is movable; determine the first operation schedule or the second operation schedule when the commodity or the service is movable; and determine the first operation schedule when the commodity or the service is not movable. Further, in those cases, at least one of the location at which the commodity or the service is to be provided and the location at which the provision of the commodity or the service is to be received may be designated by the user.

Further, in those cases, the operation management means may be configured to: acquire pieces of information serving as the requests received from the plurality of users and each including at least a desired boarding location at which to get on the on-demand vehicle, a desired drop-off location at which to get off the on-demand vehicle, and any one of a desired boarding time at which to get on the on-demand vehicle at the desired boarding location and a desired drop-off time at which to get off the on-demand vehicle at the desired drop-off location; and temporarily determine, by using the acquired pieces of information, the operation schedule of the on-demand vehicle satisfying the requests made by the plurality of users, determine the first operation schedule or the second operation schedule based on the temporarily determined operation schedule, and finally determine the operation schedule of the on-demand vehicle including the determined first operation schedule or second operation schedule and satisfying the requests made by the plurality of users. Note that, in this case, the information acquisition means may acquire pieces of information serving as the requests received from the plurality of users and each including at least a desired boarding location at which to get on the on-demand vehicle, a desired drop-off location at which to get off the on-demand vehicle, and any one of a desired boarding time at which to get on the on-demand vehicle at the desired boarding location and a desired drop-off time at which to get off the on-demand vehicle at the desired drop-off location, and the operation schedule determination means may temporarily determine, by using the pieces of information acquired by the information acquisition means, the operation schedule of the on-demand vehicle satisfying the requests made by the plurality of users, determine the first operation schedule or the second operation schedule based on the temporarily determined operation schedule, and finally determine the operation schedule of the on-demand vehicle including the determined first operation schedule or second operation schedule and satisfying the requests made by the plurality of users.

Further, in those cases, the operation management means may provide the plurality of users with operation schedule information indicating the determined operation schedule, and provide the plurality of users with operation situation information indicating an operation situation of the on-demand vehicle operating in accordance with the determined operation schedule. Note that, in this case, the operation management means may include information providing means for providing the plurality of users with operation schedule information indicating the operation schedule determined by the operation schedule determination means, and providing the plurality of users with operation situation information indicating an operation situation of the on-demand vehicle operating in accordance with the determined operation schedule.

According to those, when the operation schedule for operating the on-demand vehicle is determined, the operation management means can determine the first operation schedule in which the user who desires the provision (is to receive the provision) of the commodity or the service is moved to the location at which the commodity or the service is to be provided (more specifically, place of the provider who is to provide the service or provision place where the commodity is to be provided) or the second operation schedule in which the commodity or the service (more specifically, provider who is to provide the service or the commodity) is moved to the location at which the user is to receive the provision of the commodity or the service. At this time, the operation management means can determine the first operation schedule or the second operation schedule so that, for example, the commodity or the service can be provided at the time closer to the desired provision time desired by the user.

Further, the operation management means can temporarily determine the operation schedule based on the request received from the user of the on-demand vehicle who does not desire the provision of the commodity or the service, determine the first operation schedule or the second operation schedule based on the temporarily determined operation schedule, and determine the final operation schedule by including therein the first operation schedule or the second operation schedule that has been determined. Accordingly, by including the first operation schedule or the second operation schedule that has been determined, the operation management means can determine the operation schedule that satisfies the request made by the user who desires the provision of the commodity or the service, and satisfies the request made by the user who does not desire the provision of the commodity or the service.

Those allow the operation schedule of the on-demand vehicle to be determined efficiently and rationally, with the result that the request made by the user who uses the on-demand vehicle can be satisfied appropriately. Further, the on-demand vehicle can be operated efficiently and rationally, which can appropriately suppress the fare borne by the user (increase in cost).

Further, another feature of one embodiment of the present invention is an on-demand vehicle operation management method for creating an operation schedule of an on-demand vehicle based on requests received from a plurality of users and managing an operation of the on-demand vehicle in accordance with the created operation schedule, the on-demand vehicle operation management method including: acquiring information including, among the requests received from the plurality of users, at least a desired provision content of a commodity or a service whose provision using the on-demand vehicle is desired and a desired provision time at which the provision of the commodity or the service is desired; determining, by using the desired provision content and the desired provision time that are included in the acquired information, a first operation schedule in which the user who desires the provision of the commodity or the service is moved to a location at which the commodity or the service is to be provided or a second operation schedule in which the commodity or the service is moved to a location at which the provision of the commodity or the service is to be received by the user; and providing the plurality of users with operation schedule information indicating the determined operation schedule, and providing the plurality of users with operation situation information indicating an operation situation of the on-demand vehicle operating in accordance with the determined operation schedule.

Further, in this case, the on-demand vehicle operation management method may further include: acquiring pieces of information serving as the requests received from the plurality of users and each including at least a desired boarding location at which to get on the on-demand vehicle, a desired drop-off location at which to get off the on-demand vehicle, and any one of a desired boarding time at which to get on the on-demand vehicle at the desired boarding location and a desired drop-off time at which to get off the on-demand vehicle at the desired drop-off location; and temporarily determining, by using the acquired pieces of information, the operation schedule of the on-demand vehicle satisfying the requests made by the plurality of users, determining the first operation schedule or the second operation schedule based on the temporarily determined operation schedule, and finally determining the operation schedule of the on-demand vehicle including the determined first operation schedule or second operation schedule and satisfying the requests made by the plurality of users.

Further, still another feature of one embodiment of the present invention is an on-demand vehicle operation management system, including: an on-demand vehicle to be ridden by a plurality of users; an operation management center for creating an operation schedule of the on-demand vehicle based on requests received from the plurality of users, and managing an operation of the on-demand vehicle in accordance with the created operation schedule; and an information terminal device for supplying the request to the operation management center by being operated by the user, in which the operation management center is configured to: acquire information including, among the requests supplied by the information terminal devices from the plurality of users, at least a desired provision content of a commodity or a service whose provision using the on-demand vehicle is desired and a desired provision time at which the provision of the commodity or the service is desired; determine, by using the desired provision content and the desired provision time that are included in the acquired information, a first operation schedule in which the user who desires the provision of the commodity or the service is moved to a location at which the commodity or the service is to be provided or a second operation schedule in which the commodity or the service is moved to a location at which the provision of the commodity or the service is to be received by the user; and provide the plurality of users with operation schedule information indicating the determined operation schedule via the information terminal devices, and provide the plurality of users with operation situation information indicating an operation situation of the on-demand vehicle operating in accordance with the determined operation schedule via the information terminal devices.

Further, in this case, the operation management center may be further configured to: acquire pieces of information serving as the requests supplied by the information terminal devices from the plurality of users and each including at least a desired boarding location at which to get on the on-demand vehicle, a desired drop-off location at which to get off the on-demand vehicle, and any one of a desired boarding time at which to get on the on-demand vehicle at the desired boarding location and a desired drop-off time at which to get off the on-demand vehicle at the desired drop-off location; and temporarily determine, by using the acquired pieces of information, the operation schedule of the on-demand vehicle satisfying the requests made by the plurality of users, determine the first operation schedule or the second operation schedule based on the temporarily determined operation schedule, and finally determine the operation schedule of the on-demand vehicle including the determined first operation schedule or second operation schedule and satisfying the requests made by the plurality of users.

### Brief Description of Drawings

FIG. 1 is a schematic diagram of an on-demand vehicle operation management system to which an on-demand vehicle operation management device according to an embodiment of the present invention can be applied.
FIG. 2 is a block diagram schematically illustrating a configuration of an information terminal device mounted to a vehicle illustrated in FIG. 1.
FIG. 3 is a block diagram schematically illustrating a configuration of an operation management center illustrated in FIG. 1.
FIG. 4 is a block diagram schematically illustrating a configuration of a portable information terminal device illustrated in FIG. 1.
FIG. 5 is a functional block diagram functionally illustrating computer program processing executed by a server (computer) illustrated in FIG. 3.
FIG. 6 shows a reservation information table used in a case 1 according to this embodiment.
FIG. 7 is a schematic diagram illustrating an operation schedule in which a recipient (user) who is to receive the provision of a commodity or a service is moved and an operation schedule in which a provider who is to provide the commodity or the service is moved, which are used in the case 1 according to this embodiment.
FIG. 8 shows a reservation information table used in a case 2 according to this embodiment.
FIG. 9 is a schematic diagram illustrating the operation schedule in which the recipient (user) who is to receive the provision of the commodity or the service is moved and the operation schedule in which the provider who is to provide the commodity or the service is moved, which are used in the case 2 according to this embodiment.
FIG. 10 is a schematic diagram illustrating a situation of a more specific case 3 according to this embodiment.
FIG. 11 shows a reservation information table used in the case 3 according to this embodiment when the user uses the on-demand bus for shopping.
FIG. 12 shows a reservation information table used in the case 3 according to this embodiment when the user requests the provision of shopping using the on-demand bus and a delivery service therefor.
FIG. 13 is a flowchart of an information providing program executed by the server placed at the operation management center illustrated in FIG. 3.

### Description of Embodiment

Now, an on-demand vehicle operation management device according to an embodiment of the present invention (hereinafter referred to as "this device") is described with reference to the accompanying drawings.

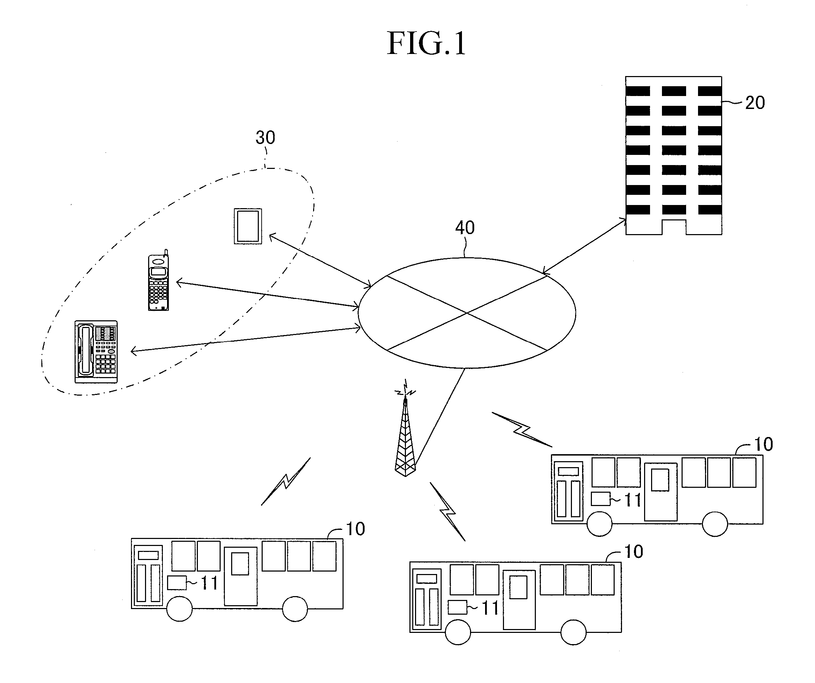

FIG. 1 illustrates a schematic configuration of an on-demand vehicle operation management system for managing an operation of an on-demand vehicle to which this device can be applied. The on-demand vehicle operation management system according to this embodiment includes: a plurality of on-demand buses 10 operated in response to a request (demand) received from a user; an operation management center 20 including this device, for determining operation schedules of the respective on-demand buses 10 and managing operations thereof; and an information terminal device 30 owned by the user. Further, in this on-demand vehicle operation management system, the respective on-demand buses 10 (more specifically, operation information terminal devices 11 described later), the operation management center 20, and the information terminal device 30 are communicably connected to each other by a network 40 such as an Internet line network or a mobile phone line network.

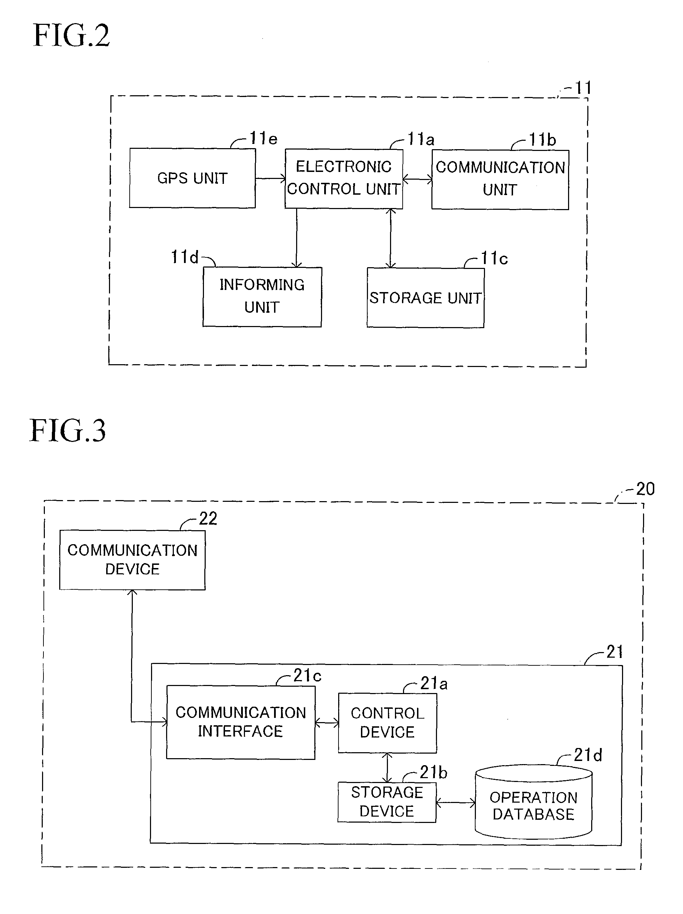

The on-demand bus 10 is a motor-omnibus in which, as well known, an operation route, operation time, and the like (hereinafter also referred to collectively as "operation schedule") are not defined in advance and which travels within a specific region in accordance with the operation schedule determined appropriately in response to the user's request (demand) by the operation management center 20 described later. For this reason, the operation information terminal device 11 for transmitting/receiving various kinds of information including operation schedule information indicating the operation schedule through communications to/from the operation management center 20 is mounted to the on-demand bus 10. As illustrated in FIG. 2, the operation information terminal device 11 includes an electronic control unit 11 a, a communication unit 11 b, a storage unit 11c, an informing unit 11d, and a GPS unit 11e.

The electronic control unit 11 a is a microcomputer including a CPU, a ROM, and a RAM as its main component parts, and centrally controls an operation of the operation information terminal device 11 mounted to the on-demand bus 10. The communication unit 11 b is configured to realize communications to/from the operation management center 20 through radio communications performed via the network 40. The storage unit 11c includes a storage medium such as a hard disk or a semiconductor memory and a drive for driving the storage medium. Further, the storage unit 11c stores a program necessary for the electronic control unit 11 a to centrally control the operation of the operation information terminal device 11 and various kinds of data including the operation schedule information, which indicates the operation schedule provided by the operation management center 20 as described later, in advance or in an updatable manner. The informing unit 11d is formed of a display, a speaker, or the like. Further, the informing unit 11 d is configured to inform of the operation schedule information by displaying a character, a graphic form, or the like on a screen of the display or outputting voice from the speaker under control of the electronic control unit 11 a. The GPS unit 11 e is configured to receive a radio wave from a global positioning system (GPS) satellite, to detect a location of the on-demand bus 10 to which the operation information terminal device 11 is mounted.

The operation management center 20 is configured to manage the operation of the on-demand bus 10 by determining the operation schedule of the on-demand bus 10 corresponding to the user's request (demand) and providing the on-demand bus 10 with the operation schedule information. Further, the operation management center 20 is configured to provide the user with the operation schedule information and provide various kinds of information on the operation of the on-demand bus 10. For this reason, as illustrated in FIG. 3, the operation management center 20 includes a server 21 and a communication device 22.

The server 21 includes a control device 21 a, a storage device 21 b, and a communication interface 21 c. The control device 21a includes a microcomputer formed of a CPU, a ROM, a RAM, and the like as its main component part, and centrally controls an operation of the operation management center 20 (more specifically, server 21) relating to the determination of the operation schedule and the management of the operation. The storage device 21 b includes a storage medium such as a hard disk or a semiconductor memory and a drive for driving the storage medium, and stores various programs and various kinds of data. The communication interface 21c is an interface for connection to a communication line (for example, LAN line) built within the operation management center 20. Further, the storage device 21 b is provided with an operation database 21 d for accumulating and storing user identification information for identifying the user and various kinds of information on the user's use of the on-demand bus 10 (hereinafter also referred to as "reservation information") in association with each other in a searchable manner. The operation database 21d further accumulates and stores bus identification information for identifying the on-demand bus 10 transmitted from the operation information terminal device 11 mounted to the on-demand bus 10 and various kinds of information involved in the operation of the on-demand bus 10 (hereinafter also referred to as "operation information") in association with each other.

Note that, the user identification information and the bus identification information are automatically stored (registered) in the operation database 21d in a searchable manner when assigned to the corresponding user and the corresponding on-demand bus 10, respectively, in advance. At this time, the user identification information is registered in association with, for example, the user's full name, the user's home address, a latitude and a longitude indicating a location of the home, and the like. Accordingly, when the user uses, for example, the information terminal device 30 to transmit the reservation information along with the user identification information, the user identification information and the reservation information are stored in a predetermined storage location of the operation database 21 d in association with each other as a reservation information table as described later. Further, when the operation information terminal device 11 transmits the operation information (specifically, positional information) along with the bus identification information, the bus identification information and the operation information are stored in a predetermined storage location of the operation database 21d in association with each other.

The communication device 22 is connected to the server 21 via the communication line built within the operation management center 20. Then, the communication device 22 is configured to realize communications to/from the operation information terminal device 11 and the information terminal device 30 by being connected to the network 40. Accordingly, the communication device 22 transmits the operation schedule information to the operation information terminal device 11, and receives therefrom the bus identification information and the operation information. Further, the communication device 22 receives the user identification information and the reservation information from the information terminal device 30, and transmits thereto the operation schedule information, operation situation information indicating an operation situation of the on-demand bus 10 based on the operation information, and decline information indicating that the user's request (demand) cannot be met in regard to the use of the on-demand bus 10.

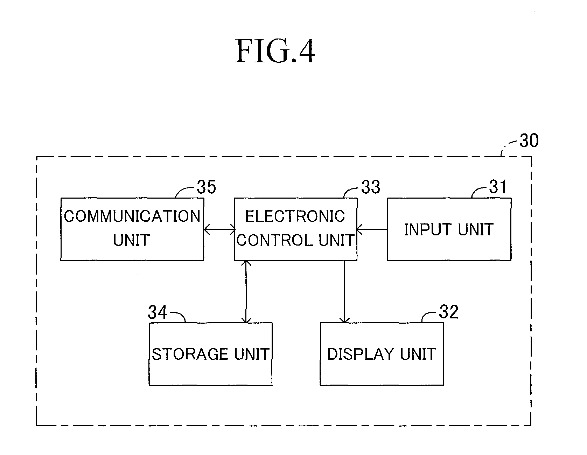

The information terminal device 30 is configured to be operated by the user to transmit the reservation information to the operation management center 20 and receive the operation schedule information, the operation situation information, and the decline information from the operation management center 20 in the form of, for example, character data using electronic mail or a voice call. For this reason, as illustrated in FIG. 4, the information terminal device 30 includes an input unit 31, a display unit 32, an electronic control unit 33, a storage unit 34, and a communication unit 35 that are communicably connected to one another. The input unit 31 is formed of, for example, a keyboard, a touch panel keyboard built in the display unit 32 for detecting a touch operation on a display panel of the display unit 32, or a speech input device capable of a call to/from an outside (specifically, operator resident in the operation management center 20). The display unit 32 is formed of, for example, a liquid crystal display, and displays a character, a graphic form, or the like on the display panel.

The electronic control unit 33 includes a microcomputer formed of a CPU, a ROM, a RAM, and the like as its main component part, and centrally controls operations of the input unit 31, the display unit 32, the storage unit 34, and the communication unit 35 by executing various application programs. The storage unit 34 stores the various application programs and various kinds of data used by the electronic control unit 33 to centrally control the operation of the information terminal device 30, and stores the user identification information (specifically, user ID information, password, and the like) necessary to access the operation management center 20 when transmitting the reservation information. The communication unit 35 is connected to the network 40 to implement a function of transmitting/receiving the user identification information, the reservation information, the operation schedule information, the decline information, speech data, and the like to/from the operation management center 20.

Here, specific examples that can be employed as the information terminal device 30 include a mobile phone such as a smartphone, a tablet information terminal, and a laptop personal computer. Note that, it should be understood in this case that, for example, a desktop personal computer placed at home or the like and a fixed-line phone placed at home or the like can be used irrespective of inferior portability thereof.

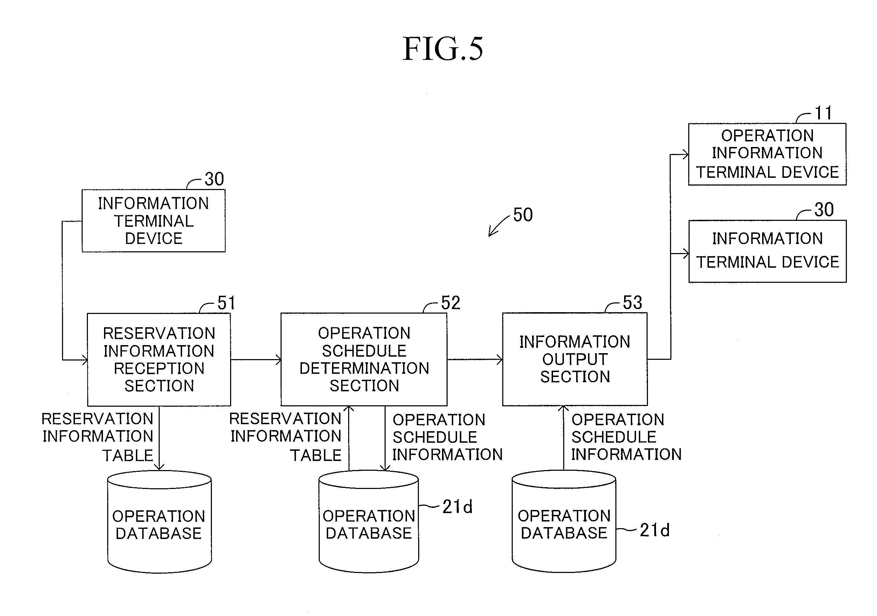

Next, the operation of the embodiment configured as described above is described with reference to a functional block diagram. As illustrated in FIG. 5, the server 21 (more specifically, control device 21 a) of the operation management center 20 according to this embodiment includes an operation management section 50 formed of a reservation information reception section 51, an operation schedule determination section 52, and an information output section 53. Note that, although not being described in detail, the server 21 of the operation management center 20 is configured to collect congestion information (such as congestion degree or driving time required in the road segment or a predetermined segment) on each road (or road segment such as segment between intersections), weather conditions, the operation information (current location of the on-demand bus 10), and the like as current information on a region (zone) within which the on-demand bus 10 is being operated, and to store the current information in the operation database 21 d. Further, the number of on-demand buses 10 is appropriately determined based on an area of an operation region (operation zone) and the number of users, and is further determined based on shopping streets, hospitals, public facilities, topographic features (such as presence/absence of a slope), a time slot, and the like. Note that, in this case, by preparing the on-demand bus 10 that is not assigned to the operation region (operation zone), it is possible to carry out the operation so as to specially assign the prepared on-demand bus 10 to the region (zone) that has a small number of users who desire a ride in accordance with the request (demand) received from the user.

The reservation information reception section 51 serving as information acquisition means receives the reservation information to be transmitted (conveyed) to the operation management center 20 by the user to request (demand) the use of the on-demand bus 10. In other words, the reservation information reception section 51 receives, from the user, a desired boarding location onto the on-demand bus 10, a desired drop-off location from the on-demand bus 10, a desired boarding time onto the on-demand bus 10, a desired drop-off time from the on-demand bus 10, a desired provision content of a commodity or a service whose provision using the on-demand bus 10 is desired, and a desired provision time at which the provision of the commodity or the service is desired, and the like, as the reservation information.

Here, the user can use the information terminal device 30 owned by himself/herself to transmit the reservation information to the operation management center 20, and can use, for example, a fixed-line phone placed at home or the like to convey the reservation information to the operator resident in the operation management center 20 in the form of a call using voice. The transmission (conveyance) of the reservation information is concisely described below mainly by taking a case of using the information terminal device 30.

When the user uses the information terminal device 30 to transmit the reservation information to the operation management center 20, the user activates, for example, a predetermined application program provided from the operation management center 20 in order to transmit the reservation information on the information terminal device 30. Then, the user uses the input unit 31 of the information terminal device 30 to input, in accordance with this predetermined application program, the desired boarding location, the desired drop-off location, the desired boarding time, and the desired drop-off time, or input the desired provision content and desired provision time of the commodity or the service. Note that, it is more likely that the desired boarding time and the desired drop-off time are not both satisfied due to traffic conditions or the like. For this reason, the user inputs and designates one of the desired boarding time and the desired drop-off time. When the reservation information is input in this manner, the electronic control unit 33 of the information terminal device 30 transmits the input reservation information and the user identification information stored in the storage unit 34 to the operation management center 20 via the communication unit 31.

On the operation management center 20, the reservation information reception section 51 uses the communication device 22 to acquire and receive the reservation information and the user identification information transmitted from the information terminal device 30 of the user. Then, the reservation information reception section 51 inputs each corresponding item of the received reservation information to the reservation information table, which is provided in advance and which includes at least the desired boarding location, the desired drop-off location, the desired boarding time, the desired drop-off time, the desired provision content, and the desired provision time as input items. When each item of the reservation information table is input based on the received reservation information, the reservation information reception section 51 stores the reservation information table and the received user identification information in a predetermined storage location of the operation database 21d in association with each other in a searchable manner. In this case, for example, when the user's home is designated as the desired boarding location or the desired drop-off location, the reservation information reception section 51 stores the user's home address or the latitude and longitude of the user's home registered in the operation database 21 d in advance in the reservation information table in association therewith.

Note that, when the user conveys the reservation information to the operator of the management center 20 in the form of, for example, a call, the operator first acquires and receives the user's full name and the reservation information, namely, the desired boarding location, the desired drop-off location, the desired boarding time (or desired drop-off time), or the desired provision content and the desired provision time, from the user in the form of a call. Then, although not shown, the operator uses an input unit (for example, keyboard) provided to the operation management center 20 to input each item of the received reservation information to the reservation information reception section 51. Further, the operator uses the acquired user's full name to acquire the user identification information registered in advance, and inputs the user identification information to the reservation information reception section 51. Accordingly, the reservation information reception section 51 stores the reservation information table on which each item input by the operator has been reflected and the input user identification information in a predetermined storage location of the operation database 21 d in association with each other in a searchable manner.

Here, in a case where the user uses the on-demand bus 10, as described later, the operation management center 20 (more specifically, server 21) needs to determine the operation schedule by securing an available on-demand bus 10. In other words, in order to secure an available on-demand bus 10 to determine the operation schedule, a certain amount of time period is necessary. For this reason, the reservation information reception section 51 is configured to transmit the decline information to the user if a time period from the current time until, at least, the desired boarding time or the desired provision time is designated so as to be equal to or smaller than a predetermined time period when the reservation information is acquired. That is, the reservation information reception section 51 is configured to keep receiving the reservation information until at least a time point when the predetermined time period can be secured, and to stop receiving the reservation information after a time point when the predetermined time period cannot be secured.

The operation schedule determination section 52 serving as operation schedule determination means determines the operation schedule of the on-demand bus 10 based on the reservation information table stored in the operation database 21 d by the reservation information reception section 51. Here, in this embodiment, based on the desired provision content that has been input to the reservation information table, the operation schedule determination section 52 carries out processing so that a location at which the commodity or the service is to be provided and a location at which the provision of the commodity or the service is received are automatically set to a shop and a home, respectively. The determination of the operation schedule is described below by taking specific exemplary situations (cases).

### <Case 1>

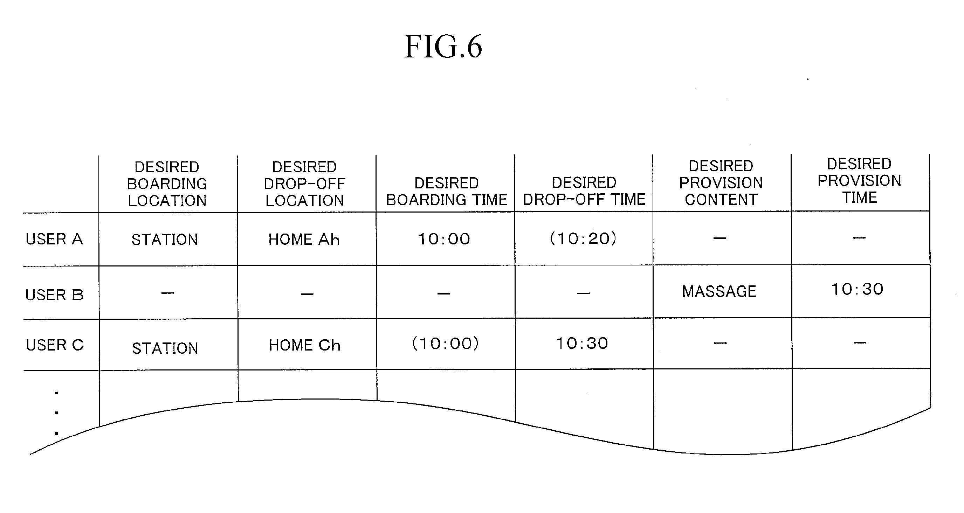

A case 1 is a case where a user "A", a user "B", and a user "C" desire the use of the on-demand bus 10 within the same time slot. Specifically, in this case 1, as shown in the reservation information table in FIG. 6, the user "A" designates a station as the desired boarding location, designates a home Ah as the desired drop-off location, and designates 10:00 as the desired boarding time. Further, the user "B" requests (demands) the provision of a massage service as the desired provision content of the commodity or the service, and designates 10:30 as the desired provision time. In addition, the user "C" designates the station as the desired boarding location, designates a home Ch as the desired drop-off location, and designates 10:30 as the desired drop-off time. Note that, in the reservation information table, parenthesized times indicate predicted times obtained by predictions based on traffic conditions or the like.

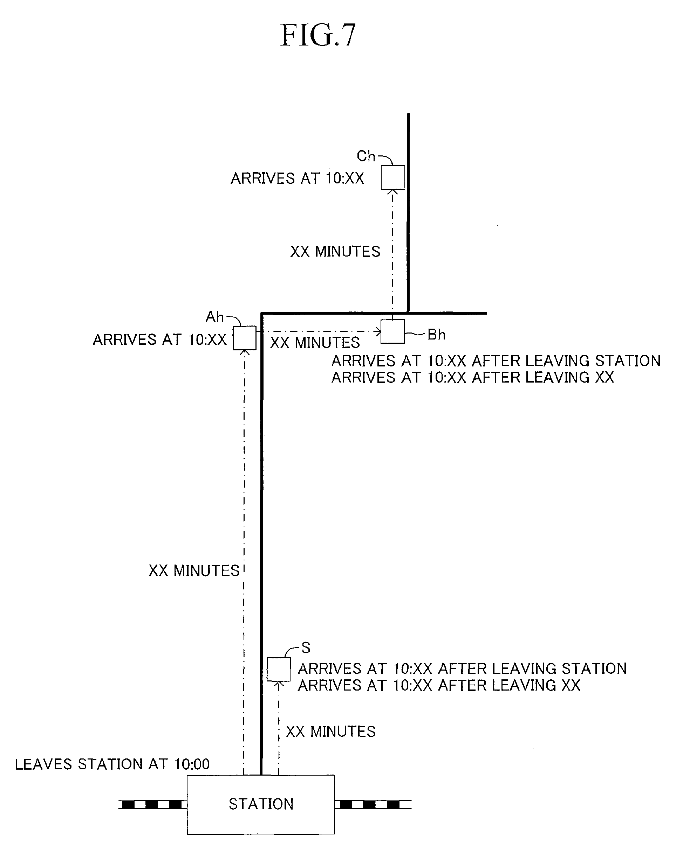

In this case 1, the operation schedule determination section 52 secures one on-demand bus 10 that travels from the station toward the home Ch of the user "C" through the home Ah of the user "A" and a home Bh of the user "B". Then, based on the desired boarding location and the desired boarding time of the user "A" and the desired boarding location and the desired drop-off time of the user "C", the operation schedule determination section 52 temporarily determines the operation schedule in which the on-demand bus 10 leaves the station at 10:00 and heads toward the home Ch of the user "C". Accordingly, as illustrated in FIG. 7, at a normal time when there are no congestion, construction, or the like on the road, the on-demand bus 10 can travel from the station to the home Ah of the user "A" for 20 minutes, and can travel from the home Ah of the user "A" to the home Ch of the user "C" for 10 minutes. Therefore, by causing the on-demand bus 10 with the user "A" and the user "C" on board to leave the station at 10:00, the user "A" can leave the station at 10:00 as desired and arrive at the home Ah at 10:20, and the user "C" can get thereon at the station as desired and reach the home Ch at 10:30.

Further, in this case 1, the operation schedule determination section 52 determines the operation schedule of one on-demand bus 10 so as to also satisfy the provision of the massage service at 10:30 as requested (demanded) by the user "B". In this case, the operation schedule determination section 52 determines the operation schedule on the assumption that the commodity or the service requested (demanded) is to be provided at a time closer to the desired provision time so as to satisfy the desired provision time and that the on-demand bus 10 has a shorter traveling distance (or operating time).

To be specifically described, the operation schedule determination section 52 first determines whether or not the massage service requested (demanded) by the user "B" is a movable service. In this case, the massage service indicated by the desired provision content is a service provided by a massager, and therefore becomes the movable service when the massager moves. Therefore, the operation schedule determination section 52 determines that the massage service is a movable service.

Subsequently, because the massage service is a movable service, the operation schedule determination section 52 determines one of an operation schedule (corresponding to second operation schedule) in which the massager who is to provide the massage service requested (demanded) by the user "B" gets on the on-demand bus 10 that leaves the station at 10:00 and heads toward the home Bh of the user "B" and an operation schedule (corresponding to first operation schedule) in which the user "B" gets on the on-demand bus 10 while the on-demand bus 10 is returning toward the station and heads toward a massage shop S. Note that, when the commodity or the service is not movable, the operation schedule determination section 52 determines the operation schedule (corresponding to first operation schedule) in which the user who requests (demands) the provision of the commodity or the service is moved.

Specifically, as illustrated in FIG. 7, in accordance with the temporarily determined operation schedule, the on-demand bus 10 arrives at the home Ah of the user "A" at 10:20 after leaving the station at 10:00 with the user "A" and the user "C" on board. Subsequently, the on-demand bus 10 with the user "C" on board arrives at the home Bh of the user "B" 5 minutes later at 10:25, and can cause the user "B" to get thereon. Then, the on-demand bus 10 arrives at the home Ch of the user "C" 5 minutes later at 10:30. In this manner, after arriving at the home Ch of the user "C" at 10:30 as desired, for example, the on-demand bus 10 with the user "B" on board returns toward the station, and can arrive at the massage shop S at 10:55 (strictly, an arrival time is delayed by boarding/drop-off time periods of the user "B" and the user "C"). In other words, in this case 1, when the operation schedule (corresponding to first operation schedule) in which the user "B" serving as a recipient who is to receive the provision of the commodity or the service moves to the place (massage shop S) of the massager serving as a provider who is to provide the commodity or the service is determined, the user "B" is to receive the provision of the massage service at 10:55 or later.

Note that, in this case 1, assuming that the user "C" does not exist, the on-demand bus 10 with the user "A" on board arrives at the home Ah of the user "A" at 10:20 even in this case. Then, in this case, the on-demand bus 10 in an empty state arrives at the home Bh of the user "B" 5 minutes later at 10:25. After that, the on-demand bus 10 with the user "B" on board returns toward the station, and arrives at the massage shop S at 10:45 (strictly, the arrival time is delayed by a boarding time period of the user "B"). In other words, in this case, the user "B" is to receive the provision of the massage service at 10:45 or later.

On the other hand, in regard to the on-demand bus 10 that leaves the station at 10:00 with the user "A" and the user "C" on board, as illustrated in FIG. 7, in accordance with the temporarily determined operation schedule, after the massager gets on the on-demand bus 10 at 10:05, the on-demand bus 10 arrives at the home Bh of the user "B" at 10:25 (strictly, the arrival time is delayed by the boarding time period of the massager). In other words, in this case 1, when the operation schedule (corresponding to second operation schedule) in which the massager serving as the provider who is to provide the commodity or the service heads toward the home Bh of the user "B" serving as the recipient who is to receive the provision of the commodity or the service is determined, the user "B" can receive the provision of the massage service at 10:30 as desired. Further, in this case, in regard to the traveling distance of the on-demand bus 10, the on-demand bus 10 travels one way between the station and the home Ch of the user "C", resulting in a short traveling distance.

Therefore, in this case 1, the operation schedule determination section 52 finally determines the operation schedule by employing the operation schedule (corresponding to second operation schedule) in which the massager heads toward the home Bh of the user "B" who requests (demands) the provision of the massage service. Accordingly, it is possible to operate the on-demand bus 10 efficiently and rationally while satisfying the requests (demands) made by the user "A", the user "B", and the user "C". After determining the operation schedule of the on-demand bus 10, the operation schedule determination section 52 temporarily stores the determined operation schedule at a predetermined storage location of the operation database 21 d. Note that, in this case 1, for example, when the desired provision time designated by the user "B" is 10:45, the operation schedule determination section 52 determines the operation schedule of the on-demand bus 10 so that the requested (demanded) commodity or service is to be provided at the time closer to the desired provision time as in the above-mentioned assumption, and hence determines the operation schedule for causing the user "B" to head toward the massage shop S on one on-demand bus 10.

### <Case 2>

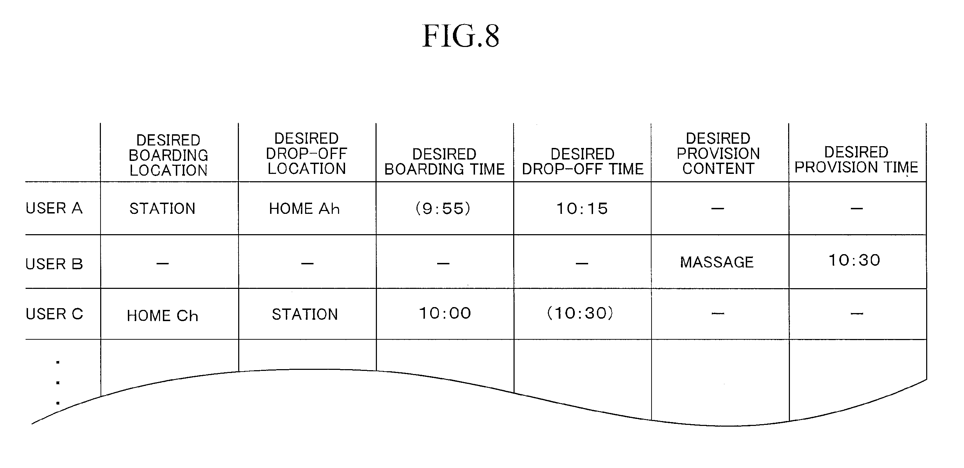

A case 2 is a case where in the same manner as in the above-mentioned case 1, the user "A", the user "B", and the user "C" desire the use of the on-demand bus 10 within the same time slot, but is a case where the operation schedules of two on-demand buses 10 are determined. Specifically, in this case 2, as shown in the reservation information table in FIG. 8, the user "A" designates the station as the desired boarding location, designates the home Ah as the desired drop-off location, and designates 10:15 as the desired drop-off time. Further, in the same manner as in the above-mentioned case 1, the user "B" requests (demands) the provision of the massage service as the desired provision content of the commodity or the service, and designates 10:30 as the desired provision time. In addition, the user "C" designates the home Ch as the desired boarding location, designates the station as the desired drop-off location, and designates 10:00 as the desired boarding time.

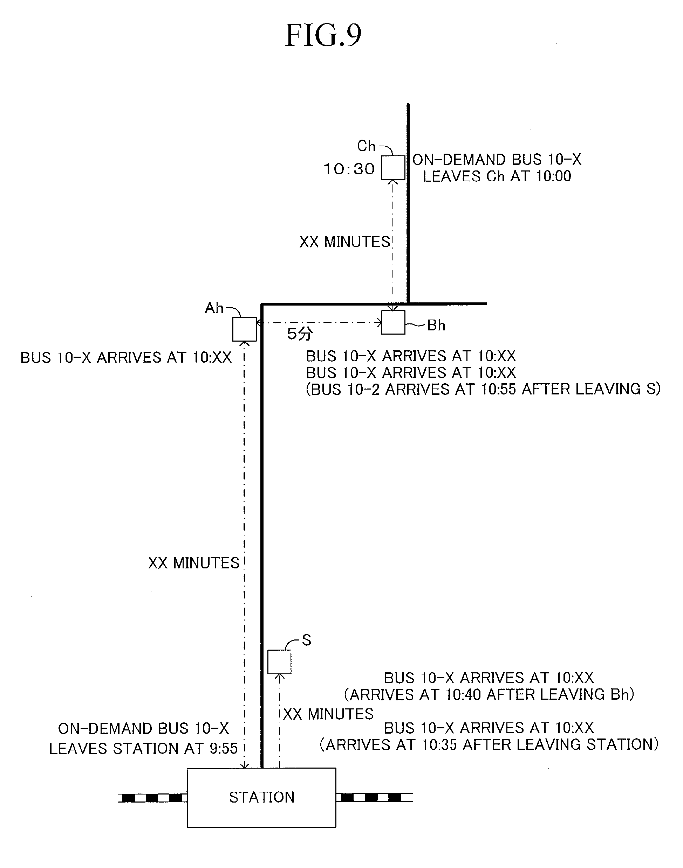

In this case 2, the request (demand) made by the user "A" and the request (demand) made by the user "C" cannot be satisfied by one on-demand bus 10, and hence the operation schedule determination section 52 secures an on-demand bus 10-1 that travels from the station so as to head toward the home Bh of the user "B" through the home Ah of the user "A" and an on-demand bus 10-2 that travels from the home Ch of the user "C" (or from farther than the home Ch of the user "C" through the home Ch) so as to head toward the station. Then, as illustrated in FIG. 9, based on the desired boarding location, the desired drop-off time, and a driving time (20 minutes) at the normal time of the user "A", the operation schedule determination section 52 temporarily determines the operation schedule in which the on-demand bus 10-1 leaves the station at 9:55. On the other hand, as illustrated in FIG. 9, based on the desired boarding location and the desired boarding time of the user "C", the operation schedule determination section 52 temporarily determines the operation schedule in which the on-demand bus 10-2 leaves the home Ch of the user "C" at 10:00 and heads toward the station. Accordingly, as illustrated in FIG. 9, after leaving the station at 9:55 with the user "A" on board, the on-demand bus 10-1 can arrive at the home Ah of the user "A" at 10:15 and arrive at the home Bh of the user "B" at 10:20. On the other hand, as illustrated in FIG. 9, after leaving the home Ch of the user "C" at 10:00, the on-demand bus 10-2 can arrive at the home Bh of the user "B" at 10:05 and arrive at the station at 10:30.

Then, also in this case 2, the operation schedule determination section 52 determines the operation schedule of the on-demand bus 10-1 or the on-demand bus 10-2 so as to satisfy the provision of the massage service at 10:30 as requested (demanded) by the user "B". In other words, in regard to any one of the on-demand bus 10-1 and the on-demand bus 10-2, the operation schedule determination section 52 in the case 2 determines one of the operation schedule (corresponding to second operation schedule) in which the massager who is to provide the massage service requested (demanded) by the user "B" heads toward the home Bh of the user "B" and the operation schedule (corresponding to first operation schedule) in which the user "B" heads toward the massage shop S.

Specifically, the on-demand bus 10-1 is first described. After leaving the station at 9:55 with the user "A" on board, as illustrated in FIG. 9, in accordance with the temporarily determined operation schedule, the on-demand bus 10-1 arrives at the home Ah of the user "A" at 10:15. Subsequently, the on-demand bus 10-1 in an empty state arrives at the home Bh of the user "B" 5 minutes later at 10:20, and can cause the user "B" to get thereon. Then, the on-demand bus 10-1 with the user "B" on board returns toward the station, and arrives at the massage shop S at 10:40 (strictly, the arrival time is delayed by the boarding time period of the user "B"). In other words, when the operation schedule (corresponding to first operation schedule) in which the user "B" uses the on-demand bus 10-1 to head toward the massage shop S (massager) is determined, the user "B" is to receive the provision of the massage service at 10:40 or later.

On the other hand, in regard to the on-demand bus 10-1 that leaves the station at 9:55 with the user "A" on board, as illustrated in FIG. 9, after causing the massager to get thereon at 10:00, the on-demand bus 10-1 arrives at the home Bh of the user "B" at 10:20 (strictly, the arrival time is delayed by the boarding time period of the massager). In other words, when the operation schedule (corresponding to second operation schedule) in which the massager uses the on-demand bus 10-1 to head toward the home Bh of the user "B" is determined, the user "B" receives the provision of the massage service at 10:20 or later.

Next, the case of the on-demand bus 10-2 is described. After leaving the home Ch with the user "C" on board, as illustrated in FIG. 9, in accordance with the temporarily determined operation schedule, the on-demand bus 10-2 can arrive at the home of the user "B" at 10:05. Then, the on-demand bus 10B with the user "B" and the user "C" on board arrives at the massage shop S (massager) at 10:25 (strictly, the arrival time is delayed by the boarding time period of the user "B"). Subsequently, the on-demand bus 10-2 with the user "C" on board arrives at the station 5 minutes later at 10:30. In other words, when the operation schedule (corresponding to first operation schedule) in which the user "B" uses the on-demand bus 10-2 to head toward the massage shop S (massager) is determined, the user "B" is to receive the provision of the massage service at 10:25 or later.

On the other hand, in regard to the on-demand bus 10-2 that arrives at the station 10:30 and then returns toward the home of the user "B", as illustrated in FIG. 9, after causing the massager to get thereon at 10:35, the on-demand bus 10-2 arrives at the home Bh of the user "B" at 10:55 (strictly, the arrival time is delayed by the boarding time period of the massager). In other words, when the operation schedule (corresponding to second operation schedule) in which the on-demand bus 10-2 is used to cause the massager to head toward the home Bh of the user "B" is determined, the user "B" is to receive the provision of the massage service at 10:55 or later.

Therefore, under the above-mentioned assumption, the operation schedule determination section 52 determines the operation schedules of the on-demand bus 10-1 and the on-demand bus 10-2 so that the requested (demanded) commodity or service is provided at the time closer to the desired provision time and that the traveling distance (driving time) becomes shorter. For this reason, in this case 2, the operation schedule determination section 52 finally determines the operation schedule by employing the operation schedule (corresponding to first operation schedule) in which the on-demand bus 10-2 is used to cause the user "B" serving as the recipient who has requested (demanded) the provision of the massage service to head toward the place (massage shop S) of the massager serving as the provider who is to provide the massage service. Further, in this case 2, in regard to the on-demand bus 10-1, for example, the operation schedule determination section 52 determines the operation schedule in which the on-demand bus 10-1 returns to the station after leaving the station at 9:55 with the user "A" on board and arriving at the home Ah of the user "A" at 10:15. After determining the respective operation schedules of the on-demand bus 10-1 and the on-demand bus 10-2, the operation schedule determination section 52 temporarily stores the determined operation schedule at the predetermined storage location of the operation database 21 d.

### <Case 3>

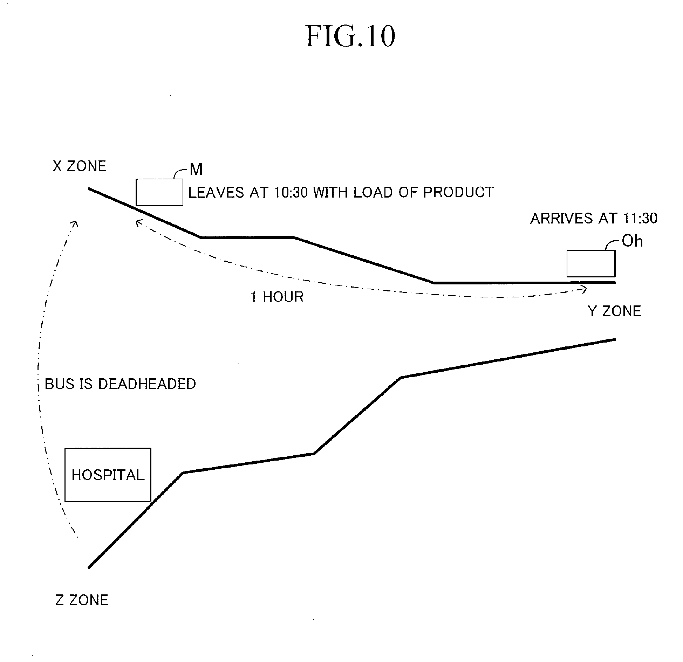

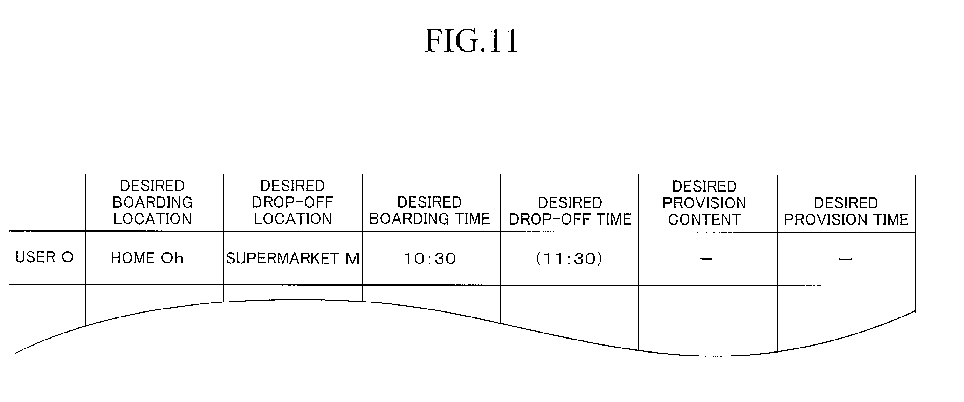

A case 3 that assumes a more specific situation is described in consideration of the schematic situations described in the above-mentioned case 1 and case 2. In this case 3, as illustrated in FIG. 10, such a situation is assumed that the on-demand bus 10 travels between an X zone and a Z zone through a Y zone and that there are a large number of requests (demands) for traveling from the X zone to the Y zone (Z zone). Further, in this case 3, as illustrated in FIG. 10, such a situation is assumed that a user "O" requests (demands) to move to a supermarket M existing in the X zone by using the on-demand bus 10 for shopping. Specifically, in this case 3, as shown in the reservation information table in FIG. 11, the user "O" designates a home Oh as the desired boarding location, designates the supermarket M within the X zone as the desired drop-off location, and designates 10:30 as the desired boarding time.

In this case 3, the operation schedule determination section 52 attempts to secure one on-demand bus 10 traveling from the Y zone so as to head toward the X zone. However, in this case 3, there is a situation in which the request (demand) to cause the on-demand bus 10 to travel from the X zone to the Y zone (specifically, hospital within the Z zone) largely prevails, and hence the on-demand bus 10 that travels from the Y zone to the X zone decreases in number, with the result that the operation schedule determination section 52 cannot secure the on-demand bus 10 that satisfies the request (demand) made by the user "O". For this reason, the operation schedule determination section 52 cannot determine the operation schedule (corresponding to first operation schedule).

Therefore, the operation schedule determination section 52 is configured to transmit the decline information to the user "O" because there is no on-demand bus 10 heading toward the supermarket M within the X zone at the designated desired boarding time (10:30). In other words, the operation schedule determination section 52 cannot secure an appropriate on-demand bus 10, and therefore stores the decline information that prompts the user "O" to cancel the reservation information at the predetermined storage location of the operation database 21d. Accordingly, the information output section 53 described later informs the user "O" of the decline information by transmitting, for example, electronic mail, or making a call using voice output via telephone.

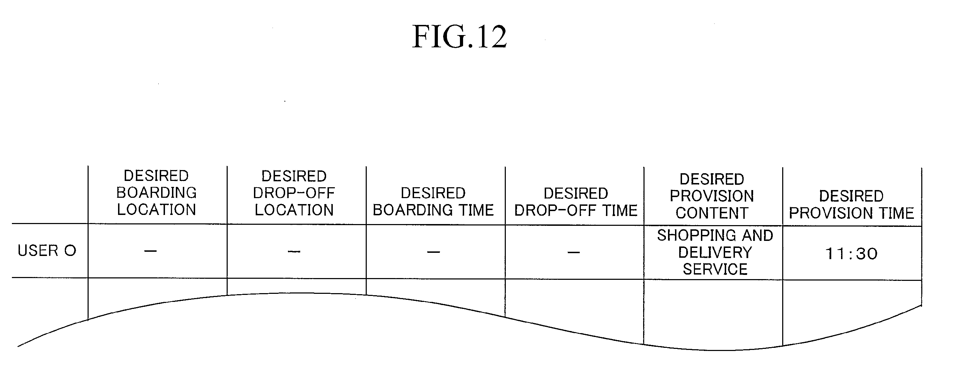

The user "O" who has acquired such decline information gives up moving himself/herself to the supermarket M for shopping, and uses the on-demand bus 10 that often travels from the X zone to the Y zone, in other words, toward the home Oh, to request (demand) a service for delivering a commodity (product such as food or an article of daily use) to the home Oh whose purchase is desired from the supermarket M. In other words, the user "O" cancels the reservation information shown in the reservation information table of FIG. 11, and instead, as shown in the reservation information table in FIG. 12, transmits the reservation information for requesting (demanding) the provision of the commodity or the service. Specifically, the user "O" designates the provision of shopping and the provision of a delivery service as the desired provision content, and designates 11:30 as the desired provision time. Note that, in this case, the user "O" transmits not only the reservation information but also the purchase list of products (commodities) whose purchase is desired, and or verbally conveys the products (commodities) whose purchase is desired to the operator.

The operation schedule determination section 52 secures one on-demand bus 10 that travels through the supermarket M within the X zone so as to head toward to the home Oh of the user "O". Then, the product whose purchase is desired is movable, and hence, based on the desired provision time (11:30) of the user "O", the operation schedule determination section 52 determines the operation schedule (corresponding to second operation schedule) in which the on-demand bus 10 leaves the supermarket M at 10:30 after receiving the purchased product, to head toward the home Oh of the user "O". Note that, in this case, the supermarket M is provided with the purchase list of the products whose purchase is desired in advance via the information output section 53 described later. Accordingly, as illustrated in FIG. 10, at the normal time when there are no congestion, construction, or the like on the road, it is possible to move from the supermarket M to the home Oh of the user "O" in one hour, and hence after leaving the supermarket M at 10:30, the on-demand bus 10 can arrive at the home Oh of the user "O" at 11:30.

Accordingly, the on-demand bus 10 can travel so as to satisfy the request (demand) made by the user "O". After determining the operation schedule of the on-demand bus 10, the operation schedule determination section 52 stores the determined operation schedule at the predetermined storage location of the operation database 21 d.

Note that, it should be understood that in this case 3, for example, when the on-demand bus 10 heading toward the X zone from the Y zone can be secured so as to satisfy the desired boarding time (10:30) and the desired boarding location (home Oh) designated by the user "O" in the first place, the operation schedule determination section 52 determines the operation schedule (corresponding to first operation schedule) in which the user "O" uses the on-demand bus 10 to move from the home Oh to the supermarket M within the X zone. Also in this case, the operation schedule determination section 52 stores the determined operation schedule at the predetermined storage location of the operation database 21d.

The information output section 53 serving as the information providing means outputs (provides) operation schedule information indicating the operation schedule determined by the operation schedule determination section 52 and the operation situation information relating to the determined operation schedule to the user. Specific descriptions thereof are made below by taking examples of the above-mentioned case 1 to case 3. Note that, in this manner, it can be recognized that the reservation information transmitted by each user has been confirmed when the operation schedule information is transmitted.

First, in the above-mentioned case 1, such a situation is assumed that one on-demand bus 10 is used by the user "A", the user "B", and the user "C". Specifically, in this case 1, such a situation is assumed that the user "A" and the user "C" use the on-demand bus 10 to move from the station to the home Ah or the home Ch and that the user "B" uses the on-demand bus 10 to receive the massage service as a provision content of the commodity or the service. Then, in this case 1, the operation schedule determination section 52 determines the operation schedule in which one on-demand bus 10 leaves the station at 10:00, causes the massager to get thereon at the massage shop S at 10:05, arrives at the home Ah of the user "A" at 10:20, arrives at the home Bh of the user "B" at 10:25 to drop off the massager, and arrives at the home Ch of the user "C" at 10:30.

Therefore, in the situation of this case 1, the information output section 53 transmits the operation schedule information indicating the operation schedule determined by the operation schedule determination section 52 to the information terminal device 30 of the user "A". Then, the information output section 53 transmits a guidance message of, for example, "Please get on the on-demand bus leaving the station at 10:00." to the information terminal device 30 of the user "A" in accordance with the operation schedule. In addition, in accordance with positional information (more specifically, current positional information) serving as the operation information on the on-demand bus 10 acquired from the operation information terminal device 11 mounted to the on-demand bus 10, the information output section 53 transmits not only the above-mentioned guidance message but also, for example, the operation situation information (status information) such as "The on-demand bus will soon arrive at the station." or "The on-demand bus will arrive late due to traffic congestion." to the information terminal device 30. Accordingly, the user "A" can get on the on-demand bus 10 and can get off the on-demand bus 10 at the home Ah at 10:20 based on the desired boarding location and the desired boarding time requested (demanded) by himself/herself by the reservation information.

Further, the information output section 53 also transmits the operation schedule information indicating the operation schedule determined by the operation schedule determination section 52 to the user "C". Then, also to the user "C", the information output section 53 transmits "Please get on the on-demand bus leaving the station at 10:00." or the like as the guidance message, and transmits "The on-demand bus will soon arrive at the station.", "The on-demand bus will arrive late due to traffic congestion.", or the like as the operation situation information (status information). Accordingly, the user "C" can get on the on-demand bus 10 and can get off the on-demand bus 10 at the home Ch at 10:30 based on the desired boarding location and the desired drop-off time requested (demanded) by himself/herself by the reservation information.

In addition, the information output section 53 also transmits the operation schedule information indicating the operation schedule determined by the operation schedule determination section 52 to the information terminal devices 30 of the user "B" and the massager at the massage shop S. Then, to the user "B", the information output section 53 transmits "The massager at the massage shop S will arrive at your home around 10:25." or the like as the guidance message, and transmits "Please get on the on-demand bus arriving at 10:05 and get off at the home Bh of the user "B"." or the like as the guidance message to the massager at the massage shop S.

Further, the information output section 53 transmits "The on-demand bus will soon arrive at your home.", "The on-demand bus will arrive late due to traffic congestion.", or the like as the operation situation information (status information) to the information terminal device 30 of the user "B". On the other hand, the information output section 53 transmits "The on-demand bus will soon arrive at the shop.", "The on-demand bus will arrive late due to traffic congestion.", or the like as the operation situation information (status information) to the massager at the massage shop S.

Accordingly, by getting on the on-demand bus 10 at 10:05, the massager at the massage shop S who is to provide the service can arrive at the home Bh of the user "B" who has requested (demanded) the provision of the service at 10:25. Therefore, the user "B" can receive the provision of the massage service at the home Bh at 10:30 based on the desired provision content and the desired provision time for the commodity or the service requested (demanded) by himself/herself by the reservation information.

Further, in the case 2, such a situation is assumed that two on-demand buses 10-1 and the on-demand bus 10-2 are used by the user "A", the user "B", and the user "C". Specifically, in this case 2, such a situation is assumed that the user "A" uses the on-demand bus 10-1 to move from the station to the home Ah, the user "C" uses the on-demand bus 10-2 to move from the home Ch to the station, and the user "B" uses the on-demand bus 10-1 or the on-demand bus 10-2 to receive the massage service as the provision content of the commodity or the service. Then, in this case 2, the operation schedule determination section 52 determines the operation schedule in which the on-demand bus 10-1 leaves the station at 9:55 with the user "A" on board and arrives at the home Ah of the user "A" at 10:15. Further, the operation schedule determination section 52 determines the operation schedule in which the on-demand bus 10-2 leaves the home Ch at 10:00 with the user "C" on board, arrives at the home Bh of the user "B" at 10:05 to cause the user "B" to get thereon, arrives at the massage shop S at 10:25 to drop off the user "B", and arrives at the station at 10:30.

Therefore, in the situation of this case 2, the information output section 53 transmits the operation schedule information indicating the operation schedule of the on-demand bus 10-1 determined by the operation schedule determination section 52 to the information terminal device 30 of the user "A". Then, the information output section 53 transmits a guidance message of, for example, "Please get on the on-demand bus leaving the station at 9:55." to the information terminal device 30 of the user "A" in accordance with the operation schedule. In addition, in accordance with the operation information (more specifically, current positional information) acquired from the operation information terminal device 11 mounted to the on-demand bus 10-1, the information output section 53 transmits not only the above-mentioned guidance message but also, for example, the operation situation information (status information) such as "The on-demand bus will soon arrive at the station." or "The on-demand bus will arrive late due to traffic congestion." to the information terminal device 30. Accordingly, the user "A" can get on the on-demand bus 10-1 and can get off the on-demand bus 10-1 at the home Ah at 10:15 based on the desired boarding location and the desired boarding time requested (demanded) by himself/herself by the reservation information.

Further, the information output section 53 also transmits the operation schedule information indicating the operation schedule of the on-demand bus 10-2 determined by the operation schedule determination section 52 to the user "C". Then, also to the user "C", the information output section 53 transmits "Please get on the on-demand bus arriving at your home at 10:00." or the like as the guidance message, and transmits "The on-demand bus will soon arrive at the station.", "The on-demand bus will arrive late due to traffic congestion.", or the like as the operation situation information (status information). Accordingly, the user "C" can get on the on-demand bus 10-2 and can get off the on-demand bus 10-2 at the station at 10:30 based on the desired boarding location and the desired drop-off time requested (demanded) by himself/herself by the reservation information.

In addition, the information output section 53 transmits the operation schedule information indicating the operation schedule of the on-demand bus 10-2 determined by the operation schedule determination section 52 to the information terminal device 30 of the user "B". Then, to the user "B", the information output section 53 transmits "Please get on the on-demand bus arriving at your home at 10:05." or the like as the guidance message, and transmits "The on-demand bus will soon arrive at the station.", "The on-demand bus will arrive late due to traffic congestion.", or the like as the operation situation information (status information).

Accordingly, by getting on the on-demand bus 10 at 10:05, the user "B" who is to receive the provision of the service can arrive at the massage shop S where the service is to be provided at 10:25. Therefore, the user "B" can receive the provision of the massage service at the massage shop S at 10:30 based on the desired provision content and the desired provision time for the commodity or the service requested (demanded) by himself/herself by the reservation information.

In addition, in the case 3, such a situation is assumed that the user "O" uses the on-demand bus 10 to head toward the supermarket M within the X zone for shopping. In this case, there are a small number of on-demand buses 10 traveling toward the X zone from the Y zone in which the home of the user "O" exists, and hence the on-demand bus 10 satisfying the desired boarding time requested (demanded) by the user "O" cannot be secured. For this reason, in this case 3, such a situation is assumed that the user "O" uses the on-demand bus 10 to receive the provision of shopping and a delivery service as the provision content of the commodity or the service. Then, in this case 3, the operation schedule determination section 52 determines the operation schedule in which the on-demand bus 10 leaves the supermarket M at 10:30 after receiving the commodity thereat and arrives at the home Oh of the user "O" at 11:30.

Therefore, in the situation of this case 3, the information output section 53 transmits the decline information indicating that, for example, the on-demand bus 10 traveling toward the supermarket M within the X zone from the home Oh cannot be secured, to the information terminal device 30 of the user "O". When new reservation information is transmitted, the information output section 53 transmits the operation schedule information indicating the operation schedule of the on-demand bus 10 determined by the operation schedule determination section 52 to the information terminal device 30 so that the purchased commodity is delivered to the home Oh from the supermarket M. Then, in accordance with the operation schedule, the information output section 53 transmits a guidance message of, for example, "The purchased product will arrive at your home around 11:30." to the information terminal device 30 of the user "O". In addition, in accordance with the operation information (more specifically, current positional information) acquired from the operation information terminal device 11 mounted to the on-demand bus 10, the information output section 53 transmits not only the above-mentioned guidance message but also the operation situation information (status information) of, for example, "The on-demand bus will soon arrive at your home." or "The on-demand bus will arrive late due to traffic congestion." to the information terminal device 30.

Further, in the situation of this case 3, the information output section 53 transmits the operation schedule information on the on-demand bus 10 determined by the operation schedule determination section 52 to an employee or the like at the supermarket M. Then, in accordance with the operation schedule, the information output section 53 transmits purchase list information indicating the purchase list of products whose purchase is desired by the user "O", and transmits a guidance message of, for example, "Please put the products whose purchase is desired by the user "O" in the on-demand bus arriving at 10:30." to the employee at the supermarket M. In addition, in accordance with the operation information (more specifically, current positional information) acquired from the operation information terminal device 11 mounted to the on-demand bus 10, the information output section 53 transmits not only the above-mentioned guidance message but also the operation situation information (status information) of, for example, "The on-demand bus delivering the product will soon arrive." or "The on-demand bus will arrive late due to traffic congestion." to the supermarket M.

Accordingly, the supermarket M can prepare the products whose purchase is desired by the user "O" and make a delivery with a load of the products on the on-demand bus 10. On the other hand, the user "O" can receive the purchased product (commodity) at the home Oh based on the desired provision content and the desired provision time for the commodity or the service requested (demanded) by himself/herself by the reservation information.

Incidentally, the user who has used the on-demand bus 10 can pay the fare or the price of the commodity or the service by using, for example, a prepaid or postpaid electronic money card or electronic payment through the short-range wireless communications between the operation information terminal device 11 and the information terminal device 30 (such as mobile phone or smartphone). In this manner, by using the electronic money card or the information terminal device 30 to pay the fare or charge within a short time period, it is possible to shorten the stopping time periods involving boarding/drop-off of the on-demand bus 10, which allows the operation to be performed in accordance with the determined operation schedule.

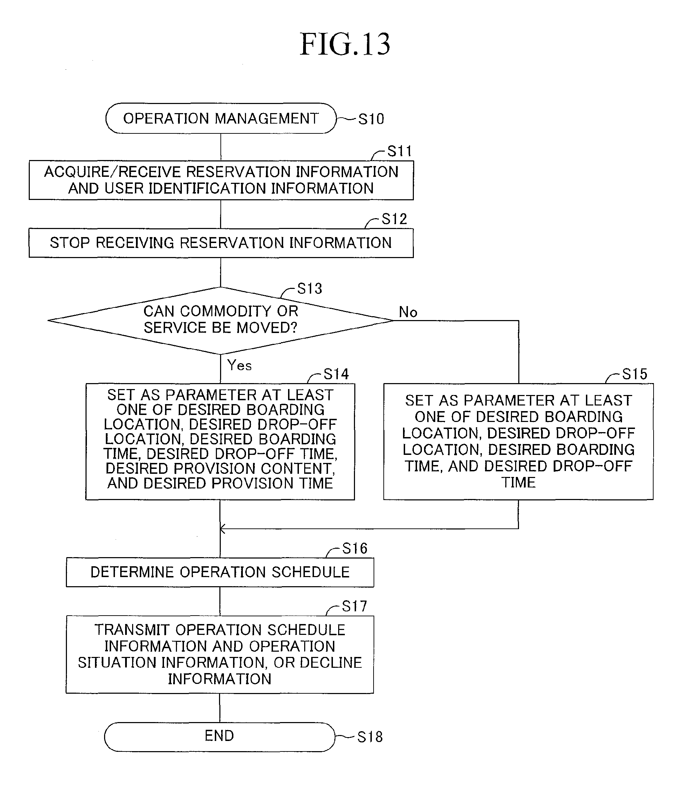

Here, as illustrated in FIG. 13, a description is made of an operation management program representing a program of each processing performed by the above-mentioned operation management section 50. The information providing program is executed by the server 21 (more specifically, CPU that constitutes the control device 21 a) of the operation management center 20.

The server 21 starts execution of the information providing program in Step S10, and in the subsequent Step S11, acquires (receives) the reservation information (including desired boarding location, desired drop-off location, desired boarding time, desired drop-off time, desired provision content, and desired provision time) and the user identification information from the user. Note that, this acquisition processing corresponds to the processing content executed by the above-mentioned reservation information reception section 51. In this manner, after acquiring (receiving) the reservation information and the user identification information, the server 21 advances to Step S12.

In Step S12, the server 21 stops acquiring (receiving) the reservation information and the user identification information from the user. Note that, this reception stopping processing corresponds to the processing content executed by the above-mentioned reservation information reception section 51. In this manner, after stopping acquiring (receiving) the reservation information and the user identification information from the user, the server 21 advances to Step S13. Note that, each processing step of Step S13 to Step S16 described below corresponds to the processing content executed by the above-mentioned operation schedule determination section 52.

In Step S13, the server 21 determines whether or not the reservation information acquired from the user in the above-mentioned Step S11 includes the desired provision content indicating a content of the commodity or the service whose provision is desired and also whether or not the commodity or the service whose provision is desired by the user and which is indicated by the desired provision content is movable. In other words, the server 21 determines "Yes" and advances to Step S14 when the reservation information acquired (received) from the user in the above-mentioned Step S11 includes the desired provision content and when the commodity or the service indicated by the desired provision content is movable. On the other hand, the server 21 determines "No" and advances to Step S15 when the commodity or the service indicated by the desired provision content is not movable or when the reservation information acquired (received) from the user does not include the desired provision content.

In Step S14, the server 21 sets, as a parameter, at least one of the desired boarding location, the desired drop-off location, the desired boarding time, the desired drop-off time, the desired provision content, and the desired provision time that are included in the reservation information acquired (received) from the user. After setting the parameter, the server 21 advances to Step S16. In this manner, by setting the parameter in Step S14, it is possible to consider a case where the commodity or the service is moved and a case where the user who is to receive the provision of the commodity or the service is moved.

In Step S15, the server 21 sets, as a parameter, at least one of the desired boarding location, the desired drop-off location, the desired boarding time, and the desired drop-off time that are included in the reservation information acquired (received) from the user. After setting the parameter, the server 21 advances to Step S16. In this manner, by setting the parameter in Step S15, only the case where the user is moved is taken into consideration.

In Step S16, the server 21 uses the parameter set in the processing step of the above-mentioned Step S14 or the above-mentioned Step S15 to determine the operation schedule (including operation route and operation time) of the on-demand bus 10. Note that, in this case, the server 21 secures the on-demand bus 10 targeted by the operation schedule to be determined. Particularly in a case where the parameter is set in the above-mentioned Step S14, when determining the operation schedule (corresponding to first operation schedule) in which the user serving as the recipient of the commodity or the service uses the on-demand bus 10 to move to a provision place for the commodity or the service or the operation schedule (corresponding to second operation schedule) in which the on-demand bus 10 is used to move the commodity or the service to the user (home of the user) serving as the recipient of the commodity or the service, the server 21 stores the operation schedule information indicating the determined operation schedule at the predetermined storage location of the operation database 21d, and advances to Step S17.

In Step S17, the server 21 transmits the operation schedule information stored at the predetermined storage location of the operation database 21d and the operation situation information (status information) based on the operation information to the user who has transmitted the reservation information (or who has conveyed the reservation information to the operator via call). Note that, in this case, when the operation schedule cannot be determined unlike in the above-mentioned case, the server 21 transmits the decline information to the user who has transmitted (or conveyed) the reservation information. In this manner, after transmitting the operation schedule information and the operation situation information or the decline information to the user, the server 21 advances to Step S18.

In Step S18, the server 21 temporarily ends the execution of the information providing program. Then, after a short time period has elapsed, the server 21 restarts the execution of the information providing program in Step S10.

As understood from the above description, according to the above-mentioned embodiment, when the operation schedule for operating the on-demand bus 10 is determined, the operation schedule determination section 52 can perform a comparison between the operation schedule (corresponding to first operation schedule) in which the user serving as the recipient who is to receive the provision of the commodity or the service is moved to the place (provision place) of the provider who is to provide the commodity or the service and the operation schedule (corresponding to second operation schedule) in which the provider is moved to the user's place (for example, home). Then, the operation schedule determination section 52 can employ the operation schedule enabling the provision of the commodity or the service at the time closer to the desired provision time at which the provision is desired by the user serving as the recipient, and exhibiting the shorter traveling distance (and driving time) of the on-demand bus 10.

Accordingly, the operation schedule of the on-demand bus 10 can be determined efficiently and rationally, with the result that the request (demand) made by the user who uses the on-demand bus 10 can be satisfied appropriately. Further, the on-demand bus 10 can be operated efficiently and rationally, which can appropriately suppress the fare borne by the user (increase in cost).

Here, in the above-mentioned embodiment, based on the desired provision content designated by the user, the operation schedule creation section 52 automatically sets the location at which the commodity or the service is to be provided as the massage shop S and the supermarket M, and automatically sets the location at which the provision of the commodity or the service is to be received as the home Bh and the home Oh. In other words, in the above-mentioned embodiment, based on a provision mode for the commodity or the service assumed from the desired provision content, the operation schedule determination section 52 carries out processing so that the location at which the commodity or the service is to be provided and the location at which the provision of the commodity or the service is to be received are automatically set. Accordingly, the operation schedule determination section 52 carries out processing so that the user "B" and the user "O" do not need to designate the location at which the provision of the commodity or the service is to be received by himself/herself.

Incidentally, in a situation in which the provider who is to provide the commodity or the service is located at other than the shop or in which the recipient who is to receive the provision of the commodity or the service is located at other than his/her home, the provision of the commodity or the service is desired in a place other than the shop or the home. Therefore, when such a provision mode is desired, as the reservation information, the user serving as the recipient can designate not only the desired provision content and the desired provision time but also at least one of the location at which the commodity or the service is to be provided and the location at which the provision of the commodity or the service is to be received. When at least one of the location for the provision and the location for the reception of the provision is thus designated, the operation schedule determination section 52 can determine the operation schedule by using the designated location in the same manner as in the above-mentioned embodiment.

In carrying out the present invention, the present invention is not limited to the above-mentioned embodiment, and different kinds of changes can be made without departing from an object of the present invention.

For example, the above-mentioned embodiment is carried out so as to provide the operation schedule information and the operation situation information (status information) to the user who has transmitted (conveyed) the reservation information to the operation management center 20. In this case, it is preferred to operate the on-demand bus 10 more efficiently by increasing a usage rate (rate of the number of occupied seats to the number of set seats) thereof. For this reason, the information output section 53 cooperates with, for example, the reservation information reception section 51 and the operation schedule determination section 52, to determine whether or not the usage rate of the on-demand bus 10 is lower than a predetermined usage rate.

When the usage rate of the on-demand bus 10 is lower than the predetermined usage rate, the information output section 53 can provide the user who does not have a reservation for the use of the on-demand bus 10 with, for example, the usage rate of the on-demand bus 10 that is currently operating (or is to operate), that is, vacancy information indicating the number of vacant seats. Accordingly, for example, when the user who needs to use the on-demand bus 10 on urgent business uses the on-demand bus 10 that has been informed of, it is possible to increase the usage rate of the on-demand bus 10, which can operate the on-demand bus 10 more efficiently while increasing the profitability. Therefore, also in this case, in the same manner as in the above-mentioned embodiment, it is possible to efficiently and rationally determine the operation schedule of the on-demand bus 10 and operate the on-demand bus 10.

Note that, in this case, the information output section 53 can extract, for example, the user who is likely to use the operation schedule determined by the operation schedule determination section 52 this time based on the past reservation information table stored in the predetermined storage location of the operation database 21 d, to provide the extracted user with the operation schedule information and the vacancy information.

Further, the above-mentioned embodiment is carried out so that the operation schedule determination section 52 determines, in principle, the operation schedule of the on-demand bus 10 without changing the reservation information transmitted (conveyed) by the user. In this case, for example, when the on-demand bus 10 that can be operated can be secured by causing a given user to change the desired boarding time or the desired provision time designated by himself/herself, the operation schedule determination section 52 can cooperate with the reservation information reception section 51 and the information output section 53 to request the user to change the reservation information. Note that, in this case, when the user agrees to change the reservation information in response to the request, for example, it is possible to give a bonus such as a discount on the fare charged when the on-demand bus 10 is used or the price of the commodity or the service. In this manner, by requesting the change of the reservation information and determining the operation schedule based on the changed reservation information, the on-demand bus 10 that can be operated can be secured more positively, which produces the same effect as in the above-mentioned embodiment.

In addition, the above-mentioned embodiment and modification example are carried out by providing the on-demand vehicle operation management device according to the present invention to the operation management center 20. In this case, the above-mentioned embodiment and modification example can be carried out so that, for example, the operation information terminal device 11 (more specifically, electronic control unit 11 a) mounted to the on-demand bus 10 and the information terminal device 30 (more specifically, electronic control unit 33) owned by the user realize operations equivalent to those of the reservation information reception section 51, the operation schedule determination section 52, and the information output section 53 that form the above-mentioned operation management section 50, separately or in cooperation with each other. Also in this case, the same effect as in the above-mentioned embodiment and modification example can be obtained.

## Claims

1. A on-demand vehicle operation management device, comprising operation management means for creating an operation schedule of an on-demand vehicle based on requests received from a plurality of users and managing an operation of the on-demand vehicle in accordance with the created operation schedule,
wherein the operation management means is configured to:
acquire information comprising, among the requests received from the plurality of users, at least a desired provision content of a commodity or a service whose provision using the on-demand vehicle is desired and a desired provision time at which the provision of the commodity or the service is desired; and
determine, by using the desired provision content and the desired provision time that are comprised in the acquired information, a first operation schedule in which the user who desires the provision of the commodity or the service is moved to a location at which the commodity or the service is to be provided or a second operation schedule in which the commodity or the service is moved to a location at which the provision of the commodity or the service is to be received by the user.

2. An on-demand vehicle operation management device according to claim 1, wherein the operation management means determines the first operation schedule or the second operation schedule so as to satisfy the desired provision time comprised in the acquired information.

3. An on-demand vehicle operation management device according to claim 1 or 2, wherein the operation management means is configured to:
determine, by using the desired provision content comprised in the acquired information, whether or not the commodity or the service desired by the user is movable;
determine the first operation schedule or the second operation schedule when the commodity or the service is movable; and
determine the first operation schedule when the commodity or the service is not movable.

4. An on-demand vehicle operation management device according to any one of claims 1 to 3, wherein at least one of the location at which the commodity or the service is to be provided and the location at which the provision of the commodity or the service is to be received is designated by the user.

5. An on-demand vehicle operation management device according to any one of claims 1 to 4, wherein the operation management means is configured to:
acquire pieces of information serving as the requests received from the plurality of users and each comprising at least a desired boarding location at which to get on the on-demand vehicle, a desired drop-off location at which to get off the on-demand vehicle, and any one of a desired boarding time at which to get on the on-demand vehicle at the desired boarding location and a desired drop-off time at which to get off the on-demand vehicle at the desired drop-off location; and
temporarily determine, by using the acquired pieces of information, the operation schedule of the on-demand vehicle satisfying the requests made by the plurality of users, determine the first operation schedule or the second operation schedule based on the temporarily determined operation schedule, and finally determine the operation schedule of the on-demand vehicle comprising the determined first operation schedule or second operation schedule and satisfying the requests made by the plurality of users.

6. An on-demand vehicle operation management device according to any one of claims 1 to 5, wherein the operation management means provides the plurality of users with operation schedule information indicating the determined operation schedule, and provides the plurality of users with operation situation information indicating an operation situation of the on-demand vehicle operating in accordance with the determined operation schedule.

7. A on-demand vehicle operation management method for creating an operation schedule of an on-demand vehicle based on requests received from a plurality of users and managing an operation of the on-demand vehicle in accordance with the created operation schedule, the on-demand vehicle operation management method comprising:
acquiring information comprising, among the requests received from the plurality of users, at least a desired provision content of a commodity or a service whose provision using the on-demand vehicle is desired and a desired provision time at which the provision of the commodity or the service is desired;
determining, by using the desired provision content and the desired provision time that are comprised in the acquired information, a first operation schedule in which the user who desires the provision of the commodity or the service is moved to a location at which the commodity or the service is to be provided or a second operation schedule in which the commodity or the service is moved to a location at which the provision of the commodity or the service is to be received by the user; and
providing the plurality of users with operation schedule information indicating the determined operation schedule, and providing the plurality of users with operation situation information indicating an operation situation of the on-demand vehicle operating in accordance with the determined operation schedule.

8. An on-demand vehicle operation management method according to claim 7, further comprising:
acquiring pieces of information serving as the requests received from the plurality of users and each comprising at least a desired boarding location at which to get on the on-demand vehicle, a desired drop-off location at which to get off the on-demand vehicle, and any one of a desired boarding time at which to get on the on-demand vehicle at the desired boarding location and a desired drop-off time at which to get off the on-demand vehicle at the desired drop-off location; and
temporarily determining, by using the acquired pieces of information, the operation schedule of the on-demand vehicle satisfying the requests made by the plurality of users, determining the first operation schedule or the second operation schedule based on the temporarily determined operation schedule, and finally determining the operation schedule of the on-demand vehicle comprising the determined first operation schedule or second operation schedule and satisfying the requests made by the plurality of users.

9. An on-demand vehicle operation management system, comprising:
an on-demand vehicle to be ridden by a plurality of users;
an operation management center for creating an operation schedule of the on-demand vehicle based on requests received from the plurality of users, and managing an operation of the on-demand vehicle in accordance with the created operation schedule; and
an information terminal device for supplying the request to the operation management center by being operated by the user,
wherein the operation management center is configured to:
acquire information comprising, among the requests supplied by the information terminal devices from the plurality of users, at least a desired provision content of a commodity or a service whose provision using the on-demand vehicle is desired and a desired provision time at which the provision of the commodity or the service is desired;
determine, by using the desired provision content and the desired provision time that are comprised in the acquired information, a first operation schedule in which the user who desires the provision of the commodity or the service is moved to a location at which the commodity or the service is to be provided or a second operation schedule in which the commodity or the service is moved to a location at which the provision of the commodity or the service is to be received by the user; and
provide the plurality of users with operation schedule information indicating the determined operation schedule via the information terminal devices, and provide the plurality of users with operation situation information indicating an operation situation of the on-demand vehicle operating in accordance with the determined operation schedule via the information terminal devices.

10. An on-demand vehicle operation management system according to claim 9, wherein the operation management center is further configured to:
acquire pieces of information serving as the requests supplied by the information terminal devices from the plurality of users and each comprising at least a desired boarding location at which to get on the on-demand vehicle, a desired drop-off location at which to get off the on-demand vehicle, and any one of a desired boarding time at which to get on the on-demand vehicle at the desired boarding location and a desired drop-off time at which to get off the on-demand vehicle at the desired drop-off location; and
temporarily determine, by using the acquired pieces of information, the operation schedule of the on-demand vehicle satisfying the requests made by the plurality of users, determine the first operation schedule or the second operation schedule based on the temporarily determined operation schedule, and finally determine the operation schedule of the on-demand vehicle comprising the determined first operation schedule or second operation schedule and satisfying the requests made by the plurality of users.
